# EUROPEAN PATENT SPECIFICATION

(11) **EP 1 176 502 B1**
(45) Date of publication and mention of the grant of the patent: **27.09.2006**
(21) Application number: 01900744.2
(22) Date of filing: 12.01.2001
(51) Int. Cl.: G06F 3/12, H04M 11/00

(54) **PERSONAL DIGITAL TERMINAL AND DATA OUTPUT CONTROL SYSTEM**
PERSÖNLICHES DIGITALES ENDGERÄT UND AUSGABESTEUERUNGSSYSTEM
TERMINAL NUMERIQUE PERSONNEL ET SYSTEME DE COMMANDE DE LA SORTIE DE DONNEES

(30) Priority: 12.01.2000 JP 2000003931
(43) Date of publication of application: 30.01.2002
(73) Proprietor: SEIKO EPSON CORPORATION, Shinjuku-ku, Tokyo 163-0811 (JP)
(72) Inventor: AOKI, Mikio, Suwa-shi Nagano 392-8502 (JP); TANIGUCHI, Shinya, Suwa-shi Nagano 392-8502 (JP); ONISHI, Joji, Suwa-shi Nagano 392-8502 (JP)
(74) Representative: Sturt, Clifford Mark
(86) International application number: PCT/JP2001/000173
(87) International publication number: WO 2001/052047

(56) References cited:
- JP-A- 10 191 453

## Description

### Technical Field

The present invention relates to a system and terminal for communicably connecting a user-owned portable terminal and multiple printing devices situated at various localities via a network, receiving data printing requests from the portable terminal, and outputting data relating to the data printing requests to one of the printing devices, and particularly relates to a portable terminal and data output control system suitably used for readily obtaining detailed information on a network.

### Background Art

In recent years, information on the Internet can be readily obtained at any location by using i-mode (Registered Trademark) provided by NTT DoCoMo, Inc., for example.

However, with such portable terminals, while information on the Internet can be readily obtained at any location, the display means is of a simple configuration due to considerations as to reduction in size of the portable terminal and reduction in power consumption and so.forth, so that the information displayed is quite simplified as compared to that displayed on a normal personal computer. Such portable terminals have been far from providing information which sufficiently satisfies the users.

Accordingly, to obtain detailed information while maintaining the small size and reduction in power consumption of the portable terminals, a proposal can be made for an arrangement of combining a portable terminal with a printing device, so as to display general information on the portable terminal and print detailed information with the printing device. However, there are several problems which must be technically solved for such an arrangement combining a portable terminal with a printing device.

For example, a printing device is large and is not readily carried along with a portable terminal, so printing detailed information using a printing device set up in the home or office can be conceived. However, using a fixed particular printing device does not guarantee that information can readily be obtained at any location, so in order to realize this there is the need to either reduce the printing device to a portable level, or to arrange for arbitrary printer devices to be used. In the case of the former, it is extremely difficult to technologically realize this at the current state, so this is not realistic. In the case of the latter, unique drivers are necessary for each printing device, so drivers for all printing devices to be used must be installed in the portable terminal, which also is not realistic.

JP10191453 discloses a data output system comprising a personal digital assistant (PDA), a mobile phone centre and a service centre. The PDA transmits document data and position data to the service centre via the mobile phone centre, in response to which the service centre transmits information on a nearby printer to the PDA. A user of the PDA can select the nearby printer from a list to allow the service centre to transmit document data to the selected printer for printing.

Accordingly, the present invention has been made in light of such unsolved problems with the current art, and it is an object thereof to provide a portable terminal and data output control system suitably used for readily obtaining detailed information on a network.

According to an aspect of the present invention, there is provided a portable terminal, which is user-owned, capable of sending data printing requests and is communicably connectable to a plurality of output terminals situated at various locations for printing data, via a data output control device and a network, said portable terminal comprising: data printing request originating means for sending said data printing requests to said data output control device; characterised by display means for displaying conceptual image data from said data output control device to provide a conceptual image representing a printed image that would be produced by an output terminal selected by the data output control device on the basis of said data printing request; input means for inputting specification of a part regarding which printing is desired in the event that the conceptual image data displayed on said displaying means consists of a plurality of sets of data; and data printing execution request originating means for sending data printing execution requests to said data output control device; wherein said data printing execution request originating means sends to said data output control device a data printing execution request containing a request for printing a specified part input with said input means, in the event that there has been input with said input means.

According to another aspect of the present invention, there is provided a data output control device capable of receiving data printing requests from a portable terminal and performing output control of data relating to the data printing requests; said data output control device being capable of communicably connecting said portable terminal and a plurality of output terminals situated at various locations for printing data, via a network; said data output control device comprising: selecting means for selecting one of said plurality of output terminals; characterised by image data generating means for generating conceptual image data displayable by said portable terminal to provide a conceptual image representing a printed image that would be produced by an output terminal selected by said selecting means on the basis of said data printing request; and output means for outputting data relating to said data printing requests to an output terminal selected by said selecting means; wherein said output means is capable of outputting conceptual image data generated by said image data generating means to said portable terminal, and in the event of receiving a data printing execution request from said portable terminal as a response to the output of said conceptual image data, said output means is further capable of outputting data specified in said data printing execution request relating to said data printing request to the output terminal selected by said selecting means.

Now, the selecting means 12 may be of any configuration so long as one of the plurality of output terminals 15 is selected, but specifically is arranged so as to select an output terminal 15 which is considered to be optimal for the user of the portable terminal 20 to receive the output data from. In this case, examples of an output terminal 15 which is considered to be optimal for the user of the portable terminal 20 to receive the output data include an output terminal 15 which is considered to be the closest distance-wise or time-wise based on the position of the portable terminal 20, an output terminal 15 which is considered to be the closest distance-wise or time-wise with the target location of the user of the portable terminal 20 as a reference, an output terminal 15 which is considered to be able to provide the user with the output data the fastest taking into consideration the data output speed of the output terminal 15, or an output terminal 15 with the most inexpensive price for providing the output data.

According to such a configuration, with the portable terminal 20, a data printing request is output to the data output control device 10 by the data printing request originating means 24.

With the data output control device 10, upon receiving a data printing request from the portable terminal 20, one is selected by the printing means from the plurality of output terminals 15, conceptual image data which is a conceptual image of data relating to a data printing request at the time of being printed at the selected output terminal 15 is generated by the image data generating means 14, and the generated conceptual image data is output to the portable terminal 20 by the output means 13.

With the portable terminal 20, upon receiving conceptual image data from the data output control device 10, the conceptual image data is displayed by the display means 22. At this time, in the event that the conceptual image data displayed consists of a plurality of sets of data, and there is input of specification of a part regarding which printing is desired from the input means 27, the data printing execution request originating means 28 sends a data printing execution request containing a request for printing the specified part, to the data output control device 10.

At the data output control device 10, upon receiving the data printing execution request from the portable terminal 20, the output means 13 outputs the data relating to the data printing request to the output terminal 15 selected by the selecting means 12. Then, the data is printed by the output terminal 15.

Now, the data relating to the data printing request may be, for example, received from the portable terminal 20, or may be obtained from somewhere else other than the data output control device 10 and portable terminal 20. In the case of the latter, more specifically, the following configuration can be given. That is, the data output control device 10 further comprises obtaining means 11 for communicably connecting via a network to the data storing terminal 16 for storing data and obtaining data relating to the data printing requests from the data storing terminal 16, with the output means 13 arranged so as to output the data obtained by the obtaining means 11 to the output terminal 15 selected by the selecting means 12.

According to such a configuration, with the data output control device 10, upon receiving a data printing request from the portable terminal 20, data relating to the data printing request is obtained from the data storing terminal 16 by the obtaining means 11, and the obtained data is output to the output terminal 15 selected by the selecting means 12, by the output means 13.

### Brief Description of the Drawings

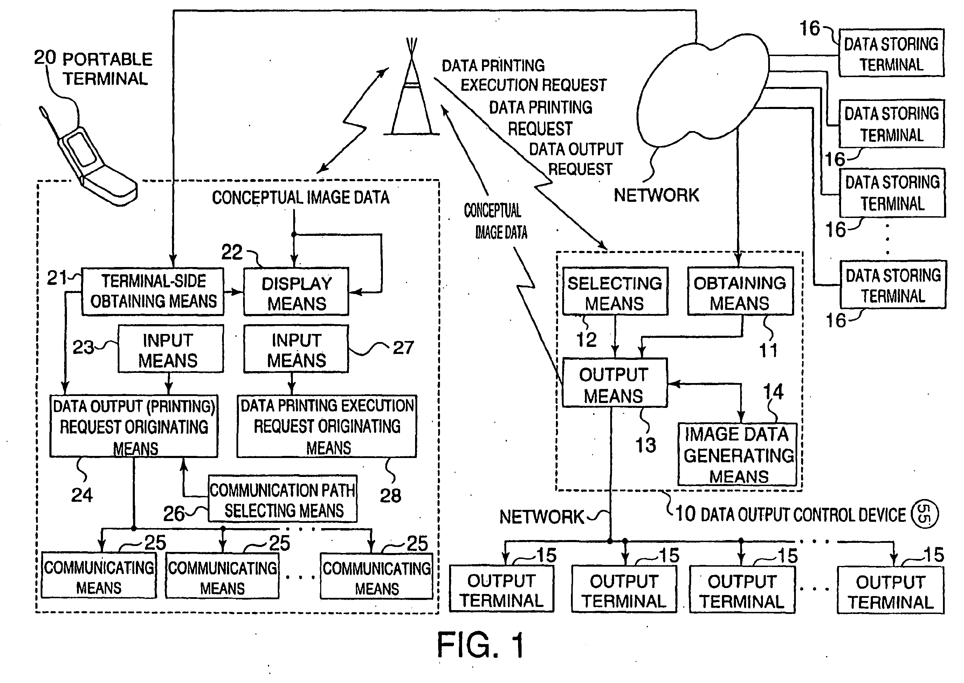

Fig. 1 is a conceptual diagram illustrating the configuration of the portable terminal and the data output control system according to an embodiment of the present invention.
Fig. 2 is a block diagram illustrating the configuration of a network system to which the portable terminal and data output control system according to the present invention are applied.
Fig. 3 is a block diagram illustrating the configuration of a portable terminal 100.
Fig. 4 is a flowchart illustrating data printing request processing.
Fig. 5 is a block diagram illustrating the configuration of a data output control terminal 300.
Fig. 6 is a flowchart illustrating data output control processing.

### Best Mode for Carrying Out the Invention

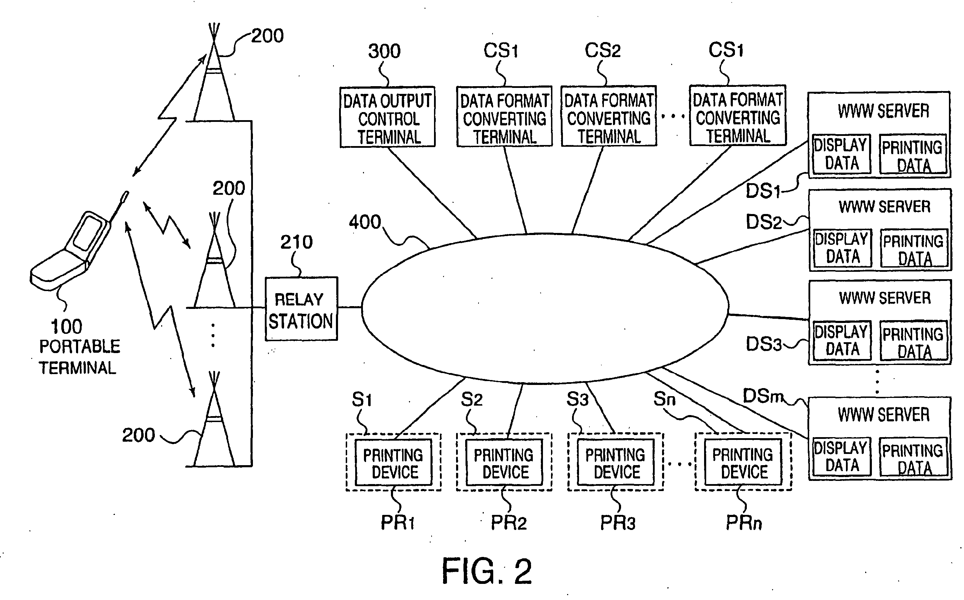

The following is a description of embodiments of the present invention, with reference to the drawings. Fig. 2 through Fig. 6 are diagrams illustrating an embodiment of a portable terminal and data output control system according to the present invention.

This embodiment is the portable terminal and data output control system according to the present invention applied to a service wherein a service provider, in accordance with printing requests for data.from users, obtains data relating to the data printing request from one of WWW (World Wide Web) servers DS₁ through DSₙ and outputs this to one of printing devices PR₁ through PRₙ, with a data output control terminal 300 which communicably connects, as shown in Fig. 2, a portable terminal 100 such as a cellular phone or the like which a user owns, and printing devices PR₁ through PRₙ each installed in a plurality of locally-situated shops S₁ through Sₙ, via the Internet 400. Now, while only one portable terminal 100 is shown in order to facilitate understanding of the invention, in reality a plurality of different models of portable terminals 100 can be connected to the Internet 400.

First, the configuration of the network system to which the portable terminal and data output control system according to the present invention is applied will be described with reference to Fig. 2. Fig. 2 is a block diagram illustrating the configuration of the network system to which the portable terminal and data output control system according to the present invention are applied.

As shown in Fig. 2, connected to the Internet 400 are a relay station 210 for relaying communications between the portable terminal 100 and the Internet 400, printing devices PR₁ through PRₙ for printing data, WWW servers DS₁ through DSₘ for storing data, a data output control terminal 300 for obtaining data relating to a data printing request from one of the WWW servers DS₁ through DSₘ and outputting to one of the printing devices PR₁ through PRₙ, and data format converting terminals CS₁ through CS₁ for converting the data obtained by the data output control terminal 300 into data which can be printed by the printing devices PR₁ through PRₙ.

Multiple base stations 200 which perform wireless communication with the portable terminal 100 are connected to the relay station 210, so in the event that the portable terminal 100 is to connect to the Internet 400, the relay station 210 serves as a terminal on the Internet 400 instead of the portable terminal 100, transmitting data received from the portable terminal 100 via a base station 200 to a target terminal via the Internet 400, and also transmitting data of the target terminal on the Internet 400 to the portable terminal 100 via the base station 200. The portable terminal 100 simultaneously communicates with at least three base stations 200, the relay station 210 measures the time difference in the time from the airwaves from the portable terminal 100 to reach the base stations 200 and measures the position of the portable terminal 100 based on the measured time difference.

The WWW servers DS₁ through DSₘ are configured of a storing unit for storing display data for displaying with the portable terminal 100 and printing data for printing with the printing devices PR₁ through PRₙ corresponding to the display data, and a request processing unit for transmitting data in the storing unit to terminals such as the relay station 210 and data output control terminal 300 connected to the Internet 400 according to requests from the terminals.

The request processing unit is a function realized by an unshown CPU executing programs stored in an external storage device or the like, and transmits display data or printing data in the storage unit in.the event that there is a data transmitting request from an external terminal (portable terminal 100, data output control terminal 300, etc.). Whether to transmit display data or printing data is judged by the URL contained in the data transmission request. The storing unit stores, as printing data, various files such as text data, still image data, sound data, moving picture data such as MPEG, 3-D image data such as VRML, program data such as JAVA and so forth, and HTML (HyperText Markup Language) files.

The data format converting terminals CS₁ through CS₁ are terminals for executing data format conversion processing for converting the data obtained by the data output control terminal 300 into data which can be printed by the printing devices PR₁ through PRₙ, so that one or multiple data format converting terminals CS₁ through CS₁ are selected according to the sending load of the Internet 400 or the processing load of the data format converting terminals CS, and data format conversion processing is executed with the selected data format converting terminal CS. Specifically, one or multiple data format converting terminals CS₁ through CS₁ necessary for the data format conversion processing are selected in order of smaller sending load of the Internet 400 or processing load of the data format converting terminal CS.

The data format converting terminal CS whereby the data format converting processing is executed receives a data format conversion request and data to be converted from the data output control terminal 300, converts, of the data obtained by the data output control terminal 300, that data of a predetermined format into data which can be printed by corresponding printing devices PR₁ through PRₙ by data format conversion processing, and transmits the converted data to the data output control terminal 300.

For example, in the event that format conversion processing is being executed with the data format converting terminals CS₁ through CS₃, this would be carried out in the manner of the data format converting terminal CS₁ converting data of a predetermined format A (e.g., HTML format) of the data obtained by the data output control terminal 300 into data which can be printed by the printing devices PR₁ through PR₅, the data format converting terminal CS₂ converting data of a predetermined format B (e.g., JPEG format) of the data obtained by the data output control terminal 300 into data which can be printed by the printing devices PR₆ through PR₁₀, and the data format converting terminal CS₃ converting data of a predetermined format C (e.g., WORD (Registered Trademark) document format) of the data obtained by the data output control terminal 300 into data which can be printed by the printing devices PR₁₁ through PR₁₅. In this case, the printing devices PR₁ through PR₅ apparently serve as devices for printing the data of the predetermined data format A in a dedicated manner, the printing devices PR₆ through PR₁₀ as devices for printing the data of the predetermined data format B in a dedicated manner, and the printing devices PR₁₁ through PR₁₅ as devices for printing the data of the predetermined data format C in a dedicated manner.

Also, the data format converting terminal CS whereby data format conversion processing is to be executed converts data obtained by the data output control terminal 300, and also generates preview data displayable on the portable terminal 100 which is a conceptual image of what will be printed by the printing device PR, of the data obtained by the data output control terminal 300, for each portable terminal 100 model according to the display capabilities thereof (number of lines that can be displayed, display resolution, etc.), and transmits the generated preview data to the data output control terminal 300.

Accordingly, the data output control terminal 300 transmits data obtained from the data format conversion request and WWW server DS to the data format converting terminal CS .corresponding to the printing device PR to print data relating to the data printing request, and receives as a response thereto data which can be printed by the printing device PR at which printing is to be carried out, and preview data.

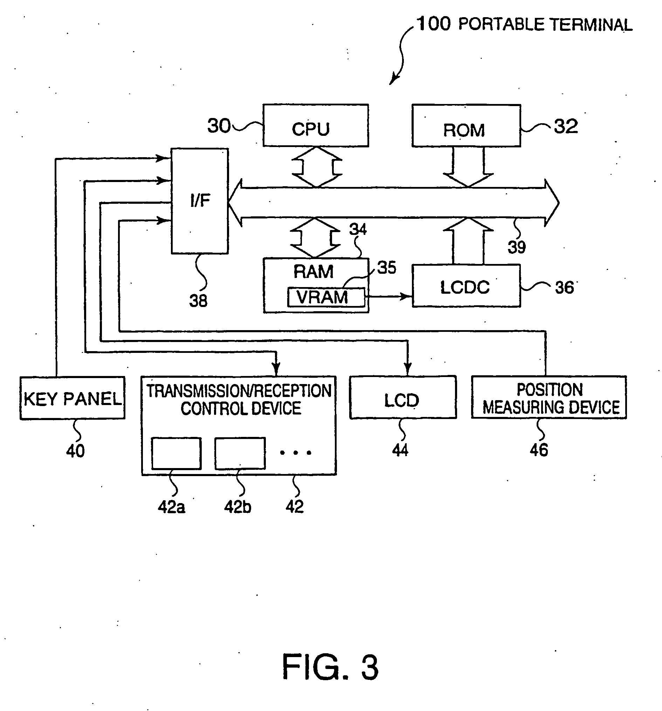

Next, the configuration of the portable terminal 100 will be described with reference to Fig. 3. Fig. 3 is a block diagram illustrating the configuration of the portable terminal 100.

As shown in Fig. 3, the portable terminal 100 is configured of a CPU 30 which controls computations and the entire system based on control programs, ROM 32 storing control programs for the CPU 30 and the like in predetermined areas beforehand, RAM 34 for storing the data read out from the ROM 32 and the like and computation results necessary in the computation processes of the CPU 30, a LCDC (Liquid Crystal Display Controller) 36 for converting data stored in a specified area of the RAM 34 into image signals and outputting to an LCD (Liquid Crystal Display) 44, and an interface 38 serving as a medium for input and output of data from and to external devices, these being connected mutually and data-exchangeably by a bus 39 which is a signal line for transferring data.

Connected to the interface 38 as external devices are a key panel 40 serving as a human interface whereby data input can be made by multiple keys, a transmission/reception control device 42 for performing wireless communication with base stations 200, an LCD 44 for displaying images based on picture signals, and a position measuring device 46 for measuring the current position.

The transmission/reception control device 42 has multiple communication devices for communicating with the base stations 200 by different communication methods, so as to communicate with base stations 200 by one of the multiple communication devices, and in the event that communication with the base stations 200 fails, communicates with the base stations 200 with another of the multiple communication devices. Two of these communication devices are made up of a long-distance communication device 42a for performing communication with base stations 200 by a long-distance wireless LAN, and a short-distance communication device 42b for performing communication with base stations 200 by a short-distance wireless LAN. Now, only the long-distance communication device 42a and short-distance communication device 42b are shown as communication devices for communicating with the base stations 200 in order to facilitate understanding of the invention, but other multiple communication devices for performing communication with the base stations 200 by different communication methods may be further connected.

The ROM 32 stores, in addition to control programs for the CPU 30, verification data for verifying whether or not the user for using the printing service provided by the data output control terminal 300 is a valid user.

The RAM 34 has, as a specified area, VRAM 35 for storing display data for displaying on the LCD 44, with the VRAM 35 being independently accessible to the CPU 30 and the LCDC 36.

The LCDC 36 sequentially reads out the display data stored in the VRAM 35 at a predetermined cycle from the leading address, converts the display data that has been read out into image signals, and outputs to the LCD 44.

The position measuring device 46 uses GPS (Global Positioning System) or the like, and receives time signals from orbit satellites transmitting time signals for the current time, so as to measure the current position based on the offset in time indicated by the times signals and the orbits of the orbit satellites.

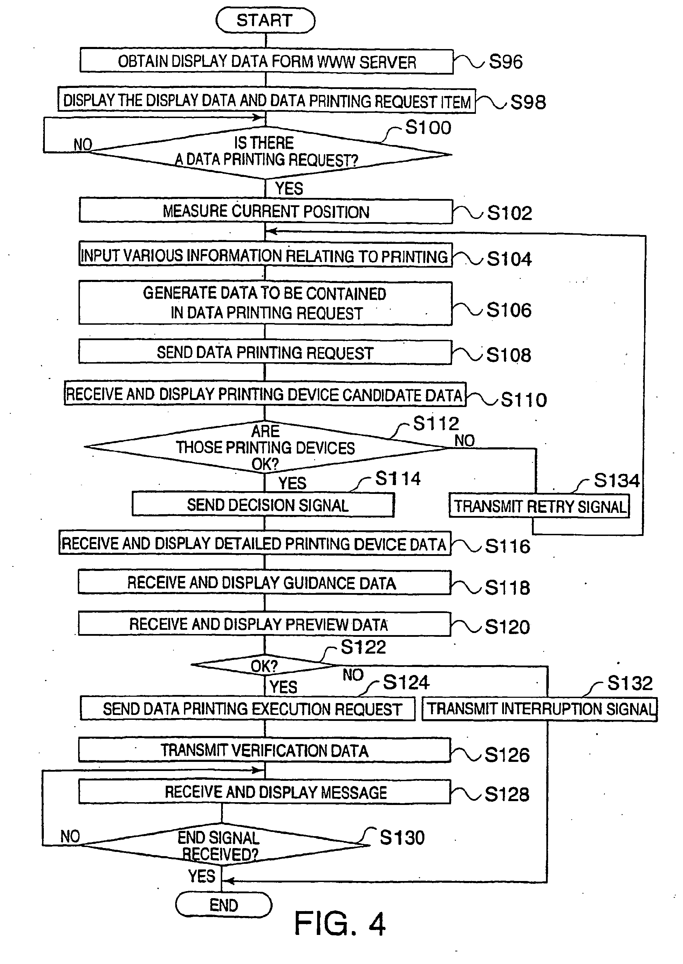

The CPU 30 is made up of a micro-processing unit MPU and the like, for activating predetermined programs stored in predetermined areas of the ROM 32, and executing data printing request processing shown in the flowchart in Fig. 4 following the programs. Fig. 4 is a flowchart illustrating the data printing request processing.

The data printing request processing is processing for requesting printing of data of a WWW server DS specified by the user from one of the printing devices PR₁ through PRₙ, by issuing a data printing request to the data output control terminal 300, and in the event that this is executed at the CPU 30, the flow goes to step S96, as shown in Fig. 4.

In step S96, the WWW server DS specified by the user is accessed and display data is obtained from the WWW server DS, the flow proceeds to step S98, wherein the obtained display data is displayed on the LCD 44 and data printing request items for inputting the printing request for the printing data corresponding to the obtained display data are displayed on the LCD 44 appended to the end of the display data, and the flow proceeds to step S100.

In step S100, judgment is made regarding whether or not the data printing request item has been selected by input from the user with the key panel 40, and in the event that judgment is made that the data printing request item has been selected (Yes), the flow proceeds to step S102 with the understanding that a data printing request has been input, the current position is measured by the position measuring device 46, the flow proceeds to step S104, and various information relating to printing is input from the key panel 40. The user inputs, as this various information relating to printing, for example, a URL which uniquely specifies the position in the Internet 400 of the WWW server DS storing the printing data to be printed, the desired providing area which is a general place where the user desires to be provided with the output data, paper size, whether color or monochrome, printing specifications of the printing device. PR such as printing precision or printing speed or the like, the data format of the printing data to be printed, and a printing device ID for identifying a printing device PR in the event of directly specifying a printing device PR. None of these input items are indispensable items, and are selectively input according to the needs of the user. However, in the event that there is no particular specification for the URL of the WWW server DS, the URL of the WWW server DS which the user is currently viewing with the portable terminal 100 is automatically input.

Next, the flow proceeds to step S106, and data to be contained in the data printing request is generated, based on the various information relating to printing that has been input. That is to say, the data to be contained in the data printing request is generated as portable terminal position data for specifying the position of the current position measured in step S102 as the position of the current position, as printing object storing position data indicating the URL of the WWW server DS, as desired providing area data indicating the desired providing area in the event that the desired providing area has been input, as printing specifications data indicating the printing specifications in the event that printing specifications for the printing device PR have been input, as printing format data indicating the data format in the event that the data format has been input, and as printing device identification data indicating the printing device ID. in the event that the printing device ID of a printing device PR has been input.

Next, the flow proceeds to step S108, the data printing request is transmitted from the transmission/reception control device 42 to the data output control terminal 300, the flow proceeds to step S110, printing device candidate data listing candidates for several printing devices PR considered to be optimal for the user to be provided with the output data is received as a response thereof from the data output control terminal 300, the listed printing device PR candidates are displayed on the LCD 44 based on the received printing device candidate data, and the flow proceeds to step S112.

In step S112, judgment is made regarding whether or not there is a printing device PR from which the user desires to be provided with the data output from the printing device PR candidates displayed on the LCD 44, and in the event that judgment has been made that there is a printing device PR from which the user desires to be provided with the data output in the list of the printing device PR candidates displayed on the LCD 44 according to input of a selected one thereof from the key panel 40 (Yes), the flow proceeds to step S114.

In step S114, decision signals indicating that a printing device PR has been decided upon are transmitted to the data output control terminal 300, the flow proceeds to step S116, printing device information which is detailed information relating to the printing device PR decided upon (the location where the printing device PR is installed, printing specifications, etc.) is received from the data output control terminal 300 as a first response to the decision signal transmission, detailed information relating to the printing device PR is displayed on the LCD 44 based on the received printing device information, and the flow proceeds to step S118.

In step S118, guidance data indicating guidance information (route information, map information, etc.) for guiding the user from the location of the portable terminal 100 to the location where the printing device PR decided upon is installed is received from the data output control terminal 300 as a second response to transmitting determination signals, the guidance information is displayed on the LCD 44 based on the received guidance data, the flow proceeds to step S120, preview data is received from the data output control terminal 300 as a third response to transmitting determination signals, a conceptual image of the printing made by the printing device PR decided upon is displayed on the LCD 44 based on the received preview data, and the flow proceeds-to step S122.

In step S122, judgment is made with the conceptual image displayed on the LCD 44 regarding whether or not the printing data to be printed is correct, and in the event that judgment is made that this is correct by the conceptual image displayed on the LCD 44 by inputting a selection from the key panel 40 to the effect that the conceptual image displayed on the LCD 44 is correct (Yes), the flow proceeds to step S124. At this time, in the event that the preview data is made up of multiple sets of data, a desired part of these can be specified in particular for printing.

In step S124, a data printing execution request is sent to the data output control terminal 300, the flow proceeds to step S126, verification data of the ROM 32 is sent to the data output control terminal 300, the flow proceeds to step S128, a message is received from the data output control terminal 300 as a response thereto , the received message is displayed on the LCD 44, the flow proceeds to step S130, judgment is made regarding whether or not an end signal indicating that printing of the data has ended has been received from the data output control terminal 300, and in the event that judgement is made that an end signal has been received (Yes), the flow of processing ends, but in the event that judgment is made otherwise (No), step S128 is repeated until an end signal is received.

On the other hand, in step S122, in the event that judgment is made that the conceptual image displayed on the LCD 44 is incorrect by the conceptual image displayed on the LCD 44 by inputting a selection from the key panel 40 to the effect that the conceptual image displayed on the LCD 44 is incorrect (No), the flow proceeds to step S132, interruption signals which are a request to interrupt printing of the data are transmitted to the data output control terminal 300, and the flow of processing ends.

On the other hand, in step S112, in the event that judgment is made that there is no printing device PR from which the user desires to be provided with output of data by inputting a selection from the key panel 40 to the effect that there is no printing device PR which the user desired in the candidates of the printing device PR displayed on the LCD 44 (No), the flow proceeds to step S134, a retry signal which is a signal for re-searching for printing devices PR considered to be optimal for the user to be provided with the output data is transmitted to the data output control terminal 300, and the flow proceeds to step S104.

On the other hand, in step S100, in the event that judgment is made that no data printing request item is selected (No), this is taken to mean that no data printing request is input, and the flow stands by at step S100 until a data printing request item is selected.

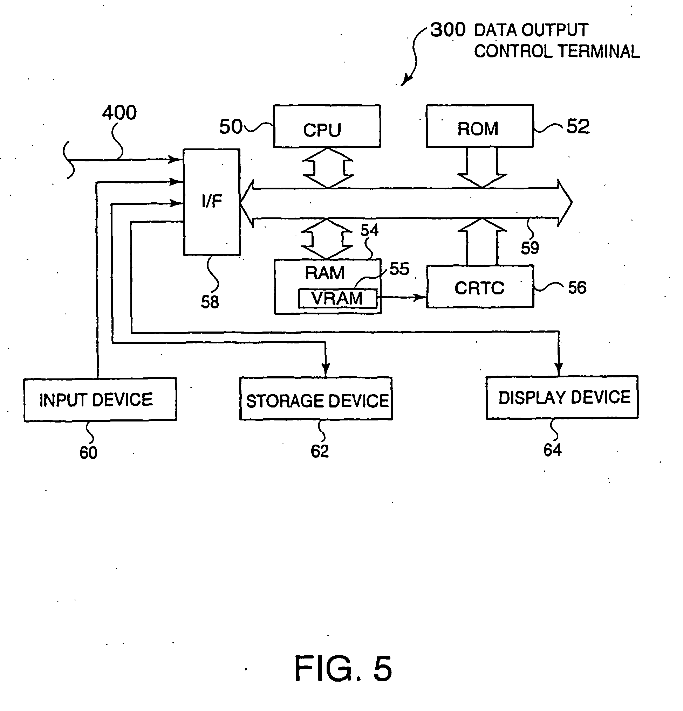

Next, the configuration of the data output control terminal 300 will be described with reference to Fig. 5. Fig. 5 is a block diagram illustrating the configuration of the data output control terminal 300.

The configuration of the data output control terminal 300 is arranged so as to obtain data relating to the data printing request from the portable terminal 100, selecting one of the printing devices PR₁ through PRₙ with which to print, and output the obtained data to the selected printing device PR, and as shown in Fig. 5, is configured of a CPU 50 which controls computations and the entire system based on control programs, ROM 52 storing control programs or the like in predetermined areas beforehand, RAM 54 for storing the data read out from the ROM 52 and the like and computation results necessary in the computation processes of the CPU 50, a CRTC 56 for converting data stored in a specified area of the RAM 54 into image signals and outputting, and an interface 58 serving as a medium for input and output of data from and to external devices, these being connected mutually and data-exchangeably by a bus 59 which is a signal line for transferring data.

Connected to the interface 58 as external devices are an input device 60 comprising a keyboard or mouse or the like serving as a human interface whereby data input can be made, a storage device 62 for storing data and tables and the like as files, a display device 64 for displaying images based on picture signals, and a signal line for connecting to the Internet 400.

The RAM 54 has, as a specified area, VRAM 55 for storing display data for displaying on the display device 64, with the VRAM 55 being independently accessible to the CPU 50 and the CRTC 56.

The CRTC 56 sequentially reads out the display data stored in the VRAM 55 at a predetermined cycle from the leading address, converts the display data that has been read out into image signals, and outputs to the display device 64.

The storage device 62 stores printing device information relating to printing devices PR necessary for selecting which of the printing devices PR₁ through PRₙ to print the data with. The printing device information for each of the printing devices PR₁ through PRₙ is made up of the following that has been registered: printing device position data for specifying the location where that printing device PR is installed, printing format data indicating the data format which the data format converting terminal CS corresponding to that printing device PR can convert (i.e., data formats which that printing device PR can print), printing specifications data indicating the printing specifications of that printing device PR, and printing device identification data indicating the printing device ID.

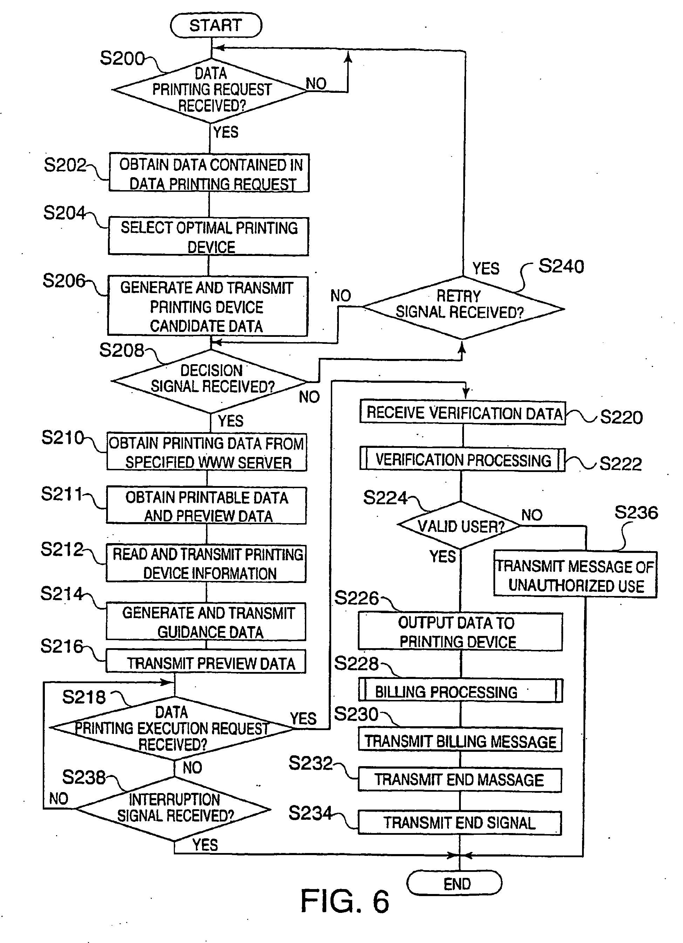

The CPU 50 is made up of a micro-processing unit MPU and the like, for activating predetermined programs stored in predetermined areas of the ROM 52, and executing data output control processing shown in the flowchart in Fig. 6 following the programs. Fig. 6 is a flowchart illustrating the data output control processing.

The data output control processing consists of obtaining from the WWW server DS the printing data relating to the data printing request from the portable terminal 100, selecting one of the printing devices PR considered to be optimal for the user of the portable terminal 100 to be provided with the output data, and outputting the obtained printing data to the selected printing device PR, and in the event that this is executed at the CPU 50, the flow first goes to step S200, as shown in Fig. 6.

In step S200, judgment is made regarding whether or not a data printing request has been received from the portable terminal 100, and in the event that judgment is made that a data printing request has been received from the portable terminal 100 (Yes), the flow proceeds to step S202, obtains data obtained in the received data printing request (containing at least portable terminal position data and printing object storing position data), proceeds to step S204, and selects a printing device PR considered to be optimal for the user of the portable terminal 100 to be provided with the output data.

Specifically, in this step S204, the printing device position data of the storage device 62 is searched based on the obtained portable terminal position data, and several printing devices PR considered to be closest distance-wise or time-wise, based on the position of the portable terminal 100, are selected. In the event that desired providing area data is contained in the data printing request, the printing device position data of the storage device 62 is searched based on the desired providing area data, and all printing devices PR in the area specified by the desired providing area data are selected. In the event that printing specifications data is contained in the data printing request, the printing specifications data of the storage device 62 is searched based on the obtained printing specifications data, and all printing devices PR matching that printing specifications data are selected.

Also, in the event that printing format data is contained in the data printing request, the printing format data of the storage device 62 is searched based on the obtained printing format data, and all printing devices PR matching that printing format data are selected. In the event that printing device identification data is contained in the data printing request, the printing device identification data of the storage device 62 is searched based on the obtained printing device identification data, and the printing device PR matching that printing device identification data is selected. In the event that a combination of such data is contained in the data printing request, the selection is narrowed based on each of the data. However, in the event that desired providing area data is contained, but the position specified by the portable terminal position data is not contained in the area specified by the desired providing area data, the selection is not narrowed by the portable terminal position data, and in the event that printing device identification data is contained, the selection is not narrowed by other data.

Next, in step S206, printing device candidate data listing the printing devices PR selected in step S202 is generated, the generated printing device candidate data is transmitted to the portable terminal 100, and the flow proceeds to step S208.

In step S208, judgment is made regarding whether or not decision signals have been received from the portable terminal 100, and in the event that judgment is made that decision signals have been received (Yes), the flow proceeds to step S210, printing data is obtained from the WWW server DS specified by the URL of the obtained printing object storing position data, the flow proceeds to step S211, the obtained printing data is transmitted to a data format converting terminal CS capable of converting the printing data and corresponding to the printing device PR which has been decided upon, data which can be printed by the printing device PR decided upon and preview data is obtained from the data format converting terminal CS as a response thereto, and the flow proceeds to step S212.

In step S212, printing device information regarding the printing device PR decided upon is read out from the storing device 62, the read printing device information is transmitted to the portable terminal 100, the flow proceeds to step S214, guidance data regarding the printing device PR decided upon is generated, the generated guidance data is transmitted to the portable terminal 100, the flow proceeds to step S216, the preview data is transmitted to the portable terminal 100, and the flow proceeds to step S218.

In step S218, judgment is made regarding whether or not a data printing execution request has been received from the portable terminal 100, and in the event that judgment is made that a data printing request has been received (Yes), the flow proceeds to step S220 and receives verification data from the portable terminal 100, the flow proceeds to step S222, verification processing is executed based on the received verification data for verifying whether or not the user of the portable terminal 100 is a valid user for using the printing service provided by the data output control terminal 300, and the flow proceeds to step S224.

In step S224, judgment is made regarding whether or not the user of the portable terminal 100 is a valid user as a result of the verification processing performed in step S222, in the event that judgment is made that the user is a valid user (Yes), the flow proceeds to step S226, the data which can be printed at the printing device PR decided upon is transmitted to that printing device PR, the flow proceeds to step S228, and billing processing for performing billing according to the results of use of the printing service provided by the data output control terminal 300 by the portable terminal 100 is executed.

In this step S228, specifically, the telephone bill of the portable terminal 100 (e.g., telephone bill per minute) is calculated, the service usage fees according to the usage results of the portable terminal 100 are calculated making reference to a fee calculating stipulation table defining the service usage fees as prices of the Printing services provided for, e.g., the amount of printing data obtained, the number of sheets printed with the printing device PR, and the printing specifications of the printing device PR, as usage results of the portable terminal 100, the calculated service usage fees are added to the telephone bill, and the added total amount is stored:as an invoice amount for the user of the portable terminal 100.

Next, the flow proceeds to step S230, a billing message indicating the service usage fees calculated by the billing processing in step S228 is transmitted to the portable terminal 100, the flow proceeds to step S232, an end message to the effect that printing of data has ended is transmitted to the portable terminal 100, the flow proceeds to step S234, an end signal is transmitted to the portable terminal 100, and the flow of processing ends.

On the other hand, in the event that judgment is made in step S224 that the user of the portable terminal 100 is not a valid user (No), the flow proceeds to step S236, a message to the effect that the user is an invalid user is transmitted to the portable terminal 100, and the flow of processing ends.

On the other hand, in the event that judgment is made in step S218 that a data printing execution request has not been received from the portable terminal 100 (No), the flow proceeds to step S238, judgment is made regarding whether or not an interruption signal has been received from the portable terminal 100, and in the event that judgment is made that an interruption signal has been received (Yes), the flow of processing ends, but in the event that judgment is made otherwise (No), the flow proceeds to step S218.

On the other hand, in the event that judgment is made in step S208 that a determining signal has not been received from the portable terminal 100 (No), the flow proceeds to step S240, judgment is made regarding whether or not a retry signal has been received from the portable terminal 100, and in the event that judgment is made that a retry signal has been received (Yes) the flow proceeds to step S200, but in the event that judgment is made otherwise (No), the flow proceeds to step S208.

On the other hand, in the event that judgment is made in step S200 that a data printing request has not been received from the portable terminal 100 (No), the flow stands by in step S200 until a data printing request is received.

Next, the operation of the above embodiment will be described.

First, in the event that a valid user for using the printing services provided by the data output control terminal 300 operates the portable terminal 100 which he/she has, and accesses for example, a WWW server DS₁, display data is obtained from the WWW server DS₁ through the steps S96 and 98, the obtained display data is displayed on the LCD 44, and also data printing request items are appended to the end of the display data and displayed on the LCD 44. Description will be made regarding the example of a case wherein the user is to print detailed data of the data displayed on the LCD 44.

In order for the user to print the object data, first, the data printing request item displayed on the LCD 44 is selected by input from the key panel 40.

Once the data printing request item is selected, the current position is measured at the portable terminal 100 by the CPU 30 with the position measuring device 46, through steps S100 and S102, and input requests for various information relating to the printing are displayed on the LCD 44. Now/if the user inputs by specifying the URL. of the WWW server DS₁ of the various information relating to the printing currently being viewed, portable terminal position data and printing object storing position data are generated as data to be contained in the data printing request, based on the input various information relating to printing, through the steps S104 through S108, and the data printing request is transmitted to the data output control terminal 300. Though transmission of the data printing request to the data output control terminal 300 is performed by the transmission/reception control device 42, specifically, one communication device of the multiple communication devices of the transmission/reception control device 42 communicates with base stations 200. In the event that communication using this communication device fails due to change in the communication state or the like, communication is made with base stations 200 using another communication device of the multiple communication devices of the transmission/reception control device 42. At this time, in the event that the long-distance communication device 42a or the short-distance communication device 42b has been selected as the communication device, communication is made with the base stations 200 by long-distance wireless LAN or short-distance wireless LAN.

At the data output control terminal 300, upon receiving the data printing request, the CPU 50 obtains data contained in the received data printing request (the portable terminal position data and printing object storing position data) through the steps S200 through S204, the printing device position data of the storing device 62 is searched based on the obtained portable terminal position data, and several printing devices PR considered to be the closest distance-wise or time-wise with the position of the portable terminal 100 as a reference, are selected. At this time, saying that printing devices PR₁ through PR₅ are selected, printing device candidate data listing the printing devices PR₁ through PR₅ is generated through step S206, and the generated printing device candidate data is transmitted to the portable terminal 100.

At the portable terminal 100, upon receiving the printing device candidate data, the listed printing devices PR₁ through PR₅ are displayed on the LCD 44 based on the received printing device candidate data, through step S110. Now, in the event that the user inputs selection of the printing device PR₁ from the key panel 40, decision signals indicating that the printing device PR₁ has been decided upon are transmitted to the data output control terminal 300, through the steps S112 and S114.

At the data output control terminal 300, upon receiving the decision signals, printing data from the WWW server DS₁ specified by the URL of the obtained printing object storing position data is obtained through the steps S208 through S211, the obtained printing data is transmitted to a data format converting terminal CS capable of converting the printing data and corresponding to the printing device PR₁ decided upon (e.g., the data format converting terminal CS₁), and data capable of being printed at the printing device PR₁ decided upon and preview data are obtained from the data format converting terminal CS₁ as a response thereto. Then, in steps S212 through 216, printing device information regarding the printing device PR₁ decided upon is read out from the storing device 62, the read printing device information is transmitted to the portable terminal 100, guidance data regarding the printing device PR₁ decided upon is generated, the generated guidance data is transmitted to the portable terminal 100, and preview data is transmitted to the portable terminal 100.

At the portable terminal 100, upon receiving the printing device information, guidance data, and preview data, the detailed information relating to the printing device PR is displayed on the LCD 44 based on the received printing device information, guidance information from the location of the portable terminal 100 to the location where the printing device PR₁ is installed is displayed on the LCD 44 based on the received guidance data, and a conceptual image of the printing performed by the printing device PR₁ decided upon is displayed on the LCD 44 based on the received preview data, by the steps S116 through S120. Now, in the event that user inputs from the key panel 40 a selection to the effect that the conceptual image displayed on the LCD 44 is correct as the printing data to be printed, the data printing execution request and verification data of the ROM 32 are transmitted to the data output control terminal 300 through the steps S122 through 126. At this time, in the event that the preview data is made up of multiple sets of data, the user can specify portions thereof to be printed in particular (trimming). In the event that trimming is performed, the data printing execution request containing the request for printing the specified portion is transmitted to the data output control terminal 300.

At the data output control terminal 300, upon receiving the data printing execution request and the verification data, verification processing is executed thought the steps S218 through S222 based on the received verification data. Here, the user is a valid user for using the printing service provided by the data output control terminal 300, so the data which can be printed by the printing device PR₁ decided upon is transmitted to the printing device PR₁ through the steps S224 through S234. At this time, in the event that a request for printing a specified part is contained in the data printing execution request, the specified part of the data capable of being printed with the printing device PR₁ is transmitted to the printing device PR₁. Then, billing processing is executed, and the billing message, end message, and end signal are transmitted to the portable terminal 100.

At the portable terminal 100, upon receiving the billing message, end message, and end signal, the billing message and end message are displayed on the LCD 44 through steps S128 and S130 being repeated. On the other hand, at the printing device PR₁, upon receiving data capable of being printed with the printing device PR₁, printing is performed based on the received data.

Following display of the end message, the user goes to the shop S₁ where the printing device PR₁ is installed, looking at the guidance information displayed on the LCD 44, and receives the data printed by the printing device PR₁. The service usage fees as the price of the printing services provided is added to the telephone bill of the portable terminal 100 and invoiced.

Conversely, the service provider can receive the price of providing the service by adding the service usage fees as the price of the printing services provided to the telephone bill and invoicing the user.

Now, in the event that the user enters for the various information relating to printing, a desired providing area which is a general area where the user desires to be provided with the output data, desired providing area data indicating the desired providing area is transmitted to the data output control terminal 300, at the data output control terminal 300 the printing device position data of the storage device 62 is searched based on the obtained desired providing area data, and all the printing devices PR in the area specified by the desired providing area data are selected.

For example, in the event that the user inputs "Shibuya" as the desired providing area, all the printing devices PR installed around Shibuya are displayed on the LCD 44 of the portable terminal 100.

Also, in the event that the user enters for the various information relating to printing, printing specifications for the printing device PR, printing specifications data indicating the printing specifications is transmitted to the data output control terminal 300, and at the data output control terminal 300, the printing specifications data of the storage device 62 is searched based on the obtained printing specifications data, and all the printing devices PR matching the printing specifications data are selected.

For example, in the event that the user inputs "Color" as the printing specifications, all the printing devices PR capable of printing data in color are displayed on the LCD 44 of the portable terminal 100.

Also, in the event that the user enters for the various information relating to printing, data format, printing format data indicating the data format is transmitted to the data output control terminal 300, and at the data output control terminal 300, the printing format data of the storage device 62 is searched based on the obtained printing format data, and all the printing devices PR matching the printing format data are selected.

For example, in the event that the user inputs "HTML" as the data format, all the printing devices PR corresponding to data format converting terminals CS capable of converting HTML format data are displayed on the LCD 44 of the portable terminal 100.

Also, in the event that the user enters for the various information relating to printing, the printing device ID of the printing device PR for directly specifying the printing device PR, printing device identification data indicating that printing device ID is transmitted to the data output control terminal 300, and at the data output control terminal 300, the printing device identification data of the storage device 62 is searched based on the obtained printing device identification data, and the printing device PR matching the printing device identification data is selected.

For example, in the event that the user inputs "0001" as the printing device ID, the printing device PR with the printing device ID "0001" is displayed on the LCD 44 of the portable terminal 100. In.the event that no printing device PR with a printing device ID "0001'' exists, no printing device PR is displayed at all.

Also, in the event that the user enters for the various information relating to printing, a combination of desired printing area, printing specifications, and data format, data indicating each is transmitted to the data output control terminal 300, and at the data output control terminal 300, the selection is narrowed down based on the multiple sets of obtained data, and all the matching printing devices PR are selected.

For example, in the event that the user inputs "Shibuya", "Color", "HTML" as the desired printing area, printing specifications, and data format, all the printing devices PR corresponding to data format converting terminals CS capable of converting HTML format data that are situated around Shibuya and are capable of printing the data in color are displayed on the LCD 44 of the portable terminal 100.

Also, in the event that the user is not a valid user for using the printing service provided by the data output control terminal 300, at the time that the conceptual image is displayed on the LCD 44, inputting from the key panel 40 a selection to the effect that the conceptual image displayed on the LCD 44 is correct as the printing data to be printed does not result in the printing device PR₁ printing the object data.

Thus, with the present embodiment, the portable terminaL 100 obtains data from the WWW server DS, displays the obtained data on the LCD 44 and also data printing request items are appended to the end of the display data and displayed on the LCD 44. In the event that a displayed data printing request item is selected, a data printing request is sent to the data output control terminal 300.

Accordingly, detailed information of the display data displayed on the LCD 44 is printed with the printing device PR, so detailed information corresponding to the simplified information on the Internet 400 which the user is viewing with the portable terminal 100 can be more readily obtained than in conventional arrangements, and particularly, data is printed merely by selecting the data printing request item appended to the display data, so data can be printed relatively easily. Accordingly, the service provider can provide information services with high satisfaction to users.

Further, with the present embodiment, the portable terminal 100 comprises a transmission/reception control device 42 having multiple communication devices for performing communication with the data output control terminal 300 by different communication methods, and in the event that a data printing request is sent to the data output control terminal 300 by one of the multiple communication devices and communication with the data output control terminal 300 fails, a data printing request is sent to the data output control terminal 300 by another of the multiple communication devices.

Accordingly, even in an environment wherein the communication state changes dynamically, as with a portable terminal 100 which performs communication while moving, communication with base stations 200 can be established in a relatively sure manner. Accordingly, service providers can provide a comfortable communication environment to the user regardless of the communication state of the portable terminal 100.

Further, with the present embodiment, the portable terminal 100 has a long-distance wireless LAN and a short-distance wireless LAN as communication devices.

Accordingly, data printing can be performed relatively easily, without the task of connecting a network cable. Thus, the service provider can provide even more satisfying information services to the user.

Further, with the present embodiment, in the event that the conceptual image data displayed on the LCD 44 is made up of multiple sets of data, and specification is input for a part thereof regarding which printing is desired, the portable terminal 100 sends a data printing execution request containing a request for printing the specified part to the data output control terminal 300.

Thus, the user can obtain from the detailed information on the Internet 400, only the information that is necessary. Accordingly, the service provider can provide even more satisfying information services to the user.

Further, with the present embodiment, the data output control terminal 300 selects a printing device PR from the multiple printing devices PR, considered to be optimal for the user of the portable terminal 100 to be provided with the output data.

Thus, the user can receive the output data more readily, and can obtain detailed information on the Internet 400 even more readily. Accordingly, the service provider can provide even more satisfying information services to the user.

Further, with the present embodiment, the data output control terminal 300 searches for printing device position data of the storage device 62 based on the portable terminal position data contained in the data printing request, and selects a printing device PR considered to be the closest distance-wise or time-wise with the position of the portable terminal 100 as a reference.

Accordingly, data relating to the data printing request is printed at a printing device PR considered to be the closest distance-wise or time-wise with the position of the portable terminal 100 as a reference, so the user can receive the output data even more readily, and can obtain detailed information on the Internet 400 even more readily. Accordingly, the service provider can provide even more satisfying information services to the user.

Further, with the present embodiment, the data output control terminal 300 searches for printing device position data of the storage device 62 based on the desired providing area data contained in the data printing request, and selects printing devices PR in the area specified by the desired providing area data.

Accordingly, data relating to the data printing request is printed at a printing device PR in the desired providing area which is a general location where the user desires to be provided with the output data, so the user can receive the output data according to his/her object, and thus can receive detailed information on the Internet 400 even more readily. Accordingly, the service provider can provide even more satisfying information services to the user.

Further, with the present embodiment, the data output control terminal 300 does not search for portable terminal position data in the event that a position specified by portable terminal position data does not exist in the area specified by the desired providing area data contained in the data printing request.

Accordingly, in the event that the user inputs a desired providing area, priority is given to searching with the desired providing area data over searching with the portable terminal position data, and data relating to the data printing request is printed at a printing device PR in the desired providing area, so the user can receive the output data with priority given to his/her object, and thus can receive detailed information on the Internet 400 even more readily. Accordingly, the service provider can provide even more satisfying information services to the user.

Further, with the present embodiment, the data output control terminal 300 searches for printing format data of the storage device 62 based on the printing format data contained in the data printing request, and selects printing devices PR matching the printing format data.

Accordingly, data relating to the data printing request is printed at a printing device PR capable of printing with the data format specified by the user, so the user can receive the output data according to his/her object, and thus can receive detailed information on the Internet 400 even more readily. Accordingly, the service provider can provide even more satisfying information services to the user.

Further, with the present embodiment, the data output control terminal 300 searches for printing specifications data of the storage device 62 based on the printing specifications data contained in the data printing request, and selects printing devices PR matching the printing specifications data.

Accordingly, data relating to the data printing request is printed at a printing device PR capable of printing with the printing specifications specified by the user, so the user can receive the output data according to his/her object, and thus can receive detailed information on the Internet 400 even more readily. Accordingly, the service provider can provide even more satisfying information services to the user.

Further, with the present embodiment, the data output control terminal 300 searches for printing device identification data of the storage device 62 based on only the printing device identification data contained in the data printing request, and selects the printing device PR matching the printing device identification data.

Accordingly, data relating to the data printing request is printed at the printing device PR uniquely specified by the user, so the user can receive the output data according to his/her object, and thus can receive detailed information on the Internet 400 even more readily. Accordingly, the service provider can provide even more satisfying information services to the user.

Further, with the present embodiment, the data output control terminal 300 outputs printing device information corresponding to the selected printing device PR to the portable terminal 100.

Accordingly, notifying the user of information relating to the printing device PR which will provide the output data can prevent the user from mistakenly printing data. Accordingly, the service provider can provide even more satisfying information services to the user.

Further, with the present embodiment, the data output control terminal 300 obtains data relating to the data printing request from a WWW server DS.

Accordingly, at the time of printing detailed information, printing data and data printable at the printing device PR is processed by the data output control terminal 300, so increased memory for the portable terminal 100 is unnecessary, and the load placed on the portable terminal 100 is reduced. Also, there is no need to read the data into the portable terminal 100, so the communication time is reduced, and the amount of time required to receive the output data is reduced. Accordingly, the service provider can provide printing services for a comfortable printing environment to the user, regardless of the functions of the portable terminal 100.

Further, with the present embodiment, the data output control terminal 300 selects one of the multiple printing devices PR based on portable terminal position data for specifying the position of the portable terminal 100.

Accordingly, data is printed at a printing device PR in a positional relation with the portable terminal 100, so, for example, selecting a printing device PR considered to be the closest distance-wise or time-wise with the position of the portable terminal 100 as a reference would allow the user to receive the output data even more readily, and obtain detailed information on the Internet 400 even more readily. Accordingly, the service provider can provide even more satisfying information services to the user.

Further, with the present embodiment, the data output control terminal 300 obtains data from a WWW server DS specified by a URL contained in the data printing request.

Thus, detailed information can be obtained from all the WWW servers DS connected to the Internet 400. Accordingly, the service provider can provide even more satisfying information services to-the user.

Further, with the present embodiment, the data output control terminal 300 obtains printing data from a WWW server DS as data relating to the data printing request.

Thus, general information is displayed on the portable terminal 100 and detailed information is printed at the printing device PR, so detailed information on the Internet 400 can be obtained with the portable terminal 100, while realizing comfortable display processing. Accordingly, the service provider can provide even more satisfying information services to the user, and can provide a more comfortable printing environment and printing services to the user.

Further, with the present embodiment, the data output control terminal 300 transmits preview data generated with a data format converting terminal CS to the portable terminal 100, and upon receiving a data printing execution request from the portable terminal 100 as a response to the output of the preview data, outputs data relating to the data printing request to the printing device PR.

Thus, preview data is notified to the user before providing the output data, thereby preventing the user from mistakenly printing out data. Accordingly, the service provider can provide even more satisfying information services to the user.

Further, with the present embodiment, the data output control terminal 300 performs billing according to the results of the use by the portable terminal 100 of printing services provided by the data output control terminal 300.

Thus, the service usage fees can be clearly calculated as the price of printing service provided, and also service usage feeds do not have to be calculated each time the user receives a printing service. Accordingly, the service provider can readily handle office routine for settling service fees and further clarify service usage fees for the user, and thus provide even more satisfying information services to the user.

Further, with the present embodiment, the service usage fees as the price of printing service provided is added to the telephone bill.

Accordingly, payment of the service usage fees is easier for the user, and the service provider can collect service usage fees easily and securely and can further easily handle office routine for settling service usage fees.

Further, with the present embodiment, the data output control terminal 300 outputs data converted with the data format converting terminal CS to the printing device PR.

Thus, even in the event that a new printing device PR is installed, it is only necessary to change the settings of the data format converting terminal CS regarding that new printing device PR at the service provider side, and the user can use the new printing device PR without making any changes in the settings at the user side. Accordingly, setting work which accompanies installing new printing devices PR is made easy for service providers, which further provides even more satisfying information services to the user.

Further, with the present embodiment, the data output control terminal 300 transmits guidance data indicating guidance information, for guiding the user from the position of the portable terminal 100 to the position where the printing device PR which has been decided upon is installed, to the portable terminal 100.

Thus, the user can follow the guidance information and go to the position where the printing device PR is installed, and thus can obtain the output data in a relatively sure manner. Accordingly, the service provider can provide even more satisfying information services to the user.

Further, with the present embodiment, the data format converting terminals CS₁ through CS₁ select one or a plurality of the data format converting terminals CS₁ through CS₁ according to the sending load of the Internet 400 or the processing load of a data format converting terminal CS, so as to execute data format conversion processing with the selected data format converting terminal CS.

Accordingly, data format conversion processing is executed with data format converting terminals CS with a small sending load of the Internet 400 or the processing load, so the time required to receive the output data becomes approximately constant, regardless of the sending load of the Internet 400 or the processing load of the data format converting terminal CS. Accordingly, the service provider can provide printing services for a more comfortable printing environment to the user.

Also, in the above embodiment, the portable terminal 100 is configured so as to display data obtained from a WWW server DS on the LCD 44 and also append a data printing request item at the end of the display data and then display this on the LCD 44, and in the event that the displayed data printing request item is selected, to send a data printing request to the data output control terminal 300, but is not restricted to this, and may be configured so as to display data obtained from a WWW server DS on the LCD 44 and also display a data printing request item as a separate menu item from the display data on the LCD 44, and in the event that the displayed data printing request item is selected, to send a data printing request to the data output control terminal 300.

Thus, data printing is carried out simply by selecting the data printing request item displayed as a menu item, so data printing can be performed relatively easily. Accordingly, the service provider can provide highly satisfying information services to the user.

Also, in the above embodiment, the portable terminal 100 is configured so as to display data obtained from a WWW server DS on the LCD 44 and also append a data printing request item at the end of the display data and then display this on the LCD 44, and in the event that the displayed data printing request item is selected, to send a data printing request to the data output control terminal 300, but is not restricted to this, and may be configured with an input button for inputting data printing requests as a part of the key panel 40, wherein, in the event that the input button is pressed, a data printing request is sent to the data output control terminal 300.

Thus, data printing is carried out simply be pressing the input button, so data printing can be performed relatively easily. Accordingly, the service provider can provide highly satisfying information services to the user.

Also, in the above embodiment, data printing requests contain portable terminal position data, printing object storing position data, desired providing area data, printing specifications data, printing format data, and printing device identification data, but the present invention is not restricted to this, and may contain only printing object storing position data.

Thus, even portable terminals having only the functions of simply displaying data obtained from a WWW server DS on the LCD 44, the printing service can be used. Accordingly the service provider can provide printing services to the user, regardless of the functions of the portable terminal.

Also, with the above embodiment, the data output control terminal 300 is configured so as to search printing device position data of the storage device 62 based on portable terminal position data generated at the portable terminal 100, but the present invention is not restricted to this, and may be configured so as to generate portable terminal position data based on position data relating to the position of the portable terminal 100 from base stations 200 to which the portable terminal 100 is connected, and search printing device position data of the storage device 62 based on the generated portable terminal position data. The same advantages as those of the above embodiment can be obtained even with such a configuration.

Also, with the above embodiment, the portable terminal 100 is configured so as to measure the current position with the position measuring device 46, and generate portable terminal position data based on the measured position, but the present invention is not restricted to this, and may be configured so as to obtain position data relating to the position of the portable terminal 100 from base stations 200 to which the portable terminal 100 is connected, and generate portable terminal position data based on the obtained position data. The same advantages as those of the above embodiment can be obtained even with such a configuration.

Also, with the above embodiment, a printing device PR which is considered to be the closest distance-wise or time-wise with the position of the portable terminal 100 as a reference, a printing device PR in an area specified by desired providing area data, a printing device PR matching printing format data, a printing device PR matching printing specifications data, or a printing device PR matching printing device identification data is selected as a printing device PR considered to bo optimal for the user of the portable terminal 100 to receive output data, but the present invention is not restricted to this, and further, the configuration may be such that, for example, a printing device PR which is considered to be able to provide the user with the output data the earliest, taking into consideration the data output speed of the printing device PR, or a printing device PR of the most inexpensive price for providing the output data, is selected.

According to the former configuration, data relating to the data printing request is printed at a printing device PR which is considered to be able to provide the user with the output data the earliest, so the user can receive output data meeting his/her object, and can obtain detailed information on the Internet 400 even more readily. Accordingly, the service provider can provide even more satisfying information services to the user.

According to the latter configuration, data relating to the data printing request is printed at a printing device PR of the most inexpensive price for providing the output data, so the user can receive output data meeting his-her object, and can obtain detailed information on the Internet 400 even more readily. Accordingly, the service provider can provide even more satisfying information services to the user.

Also, the above embodiment is configured such that printing devices PR₁ through PRₙ for printing data are provided, and data relating to data printing requests from a portable terminal 100 is printed at one of the printing devices PR, but the present invention is not restricted to this, an a configuration-may be made wherein, for example, an output device for displaying data or for outputting data as audio is provided, and data relating to the data output request from the portable terminal 100 is output at one of the output devices.

Also, the above embodiment is configured so as to generate preview data with a data format converting terminal CS, but the present invention is not restricted to this, and may be configured so as to generate preview data at the data output control terminal 300.

Also, the above embodiment is configured such that the data format converting terminals CS₁ through CS₁ select one or a plurality of the data format converting terminals CS₁ through CS₁ according to the sending load of the Internet 400 or the processing load of a data format converting terminal CS, so as to execute data format conversion processing with the selected data format converting terminal CS, but the present invention is not restricted to this, and may be configured so as to execute data format conversion processing with a specified data format converting terminal.

Also, the above embodiment is configured so as to execute the processing shown in the flowcharts in Fig. 4 and Fig. 6 with a specified data output control terminal 300, but the present invention is not restricted to this, and a configuration may be made wherein, as seen with the data format converting terminals CS₁ through CS₁, multiple data output control terminals are provided, and one of the multiple data output control terminals is selected according to the sending load of the Internet 400 or the processing load of the data output control terminals, and carried out with the selected data output control terminal.

According to such a configuration, the processing shown in the flowcharts in Fig. 4 and Fig. 6 is executed with a data output control terminal with a small sending load of the Internet 400 or the processing load, so the time required to receive the output data becomes approximately constant, regardless of the sending load of the Internet 400 or the processing load of the data output control terminal. Accordingly, the service provider can provide printing services as a more comfortable printing environment to the user.

Also, the above embodiment has been described with regard to a case of applying the portable terminal and data output control system according to the present invention to the Internet 400, but the present invention is not restricted to this, and as a matter of course can be applied to networks other than the Internet 400.

Also, the above embodiment has been described with regard to an arrangement wherein the portable terminal 100, data format converting terminals CS₁ through CS₁, WWW servers DS₁ through DSₙ, printing devices PR₁ through PRₙ, and data output control terminal 300 are connected via the same network, but the present invention is not restricted to this, and an arrangement may be made wherein the data output control terminal 300 and the portable terminal 100, the data output control terminal 300 and the data format converting terminals CS₁ through CS₁, the data output control terminal 300 and the WWW servers DS₁ through DSₘ, and the data output control terminal 300 and the printing devices PR₁ through PRₙ, are each connected via different networks.

Also, the above embodiment has been described with regard to an arrangement wherein the processing shown in the flowcharts in Fig. 4 and Fig. 6 is executed by executing control programs stored beforehand in the ROMs 32 and 52, but the present invention is not restricted to this, and may read programs from a storage medium storing programs indicating these procedures into the RAMs 34 and 54, to execute.

Now, a storage medium is a semiconductor storage medium such as RAM or ROM, a magnetic storage type storage medium such as an FD or HD, an optical reading type storage medium such as a CD, CDV, LD, or DVD, or a magnetic storage type / optical reading type storage medium such as an MO, and contains all the storage media as long as the storage medium is computer-readable, regardless of the reading method, whether electric, magnetic, optic, or so forth.

Also, with the above embodiment, the portable terminal and data output control system according to the present invention are applied to a case of providing a service wherein, as shown in Fig. 2, a service provider obtains data relating to data printing requests from one of WWW servers DS₁ through DSₘ according to the data printing requests from a user, with a data output control device 300, and outputs to one of printing devices PR₁ through PRₙ, but the present invention is not restricted to this, and is applicable to other cases without departing from the scope of the present invention.

## Claims

1. A portable terminal (100) capable of sending data printing requests and is communicably connectable to a plurality of output terminals (PR₁ to PRₙ) situated at various locations for printing data, via a data output control device (300) and a network (400), said portable terminal (100) comprising:
data printing request originating means for sending said data printing requests to said data output control device (300); **characterised by**
display means (44) for displaying conceptual image data from said data output control device (300) to provide a conceptual image representing a printed image that would be produced by an output terminal (PR) selected by the data output control device (300) on the basis of said data printing request;
input means (40) for inputting specification of a part regarding which printing is desired in the event that the conceptual image data displayed on said displaying means consists of a plurality of sets of data; and
data printing execution request originating means for sending data printing execution requests to said data output control device (300);
wherein said data printing execution request originating means sends to said data output control device (300) a data printing execution request containing a request for printing a specified part input with said input means (40), in the event that there has been input with said input means (40).

2. A data output control device (300) capable of receiving data printing requests from a portable terminal (100) and performing output control of data relating to the data printing requests;
said data output control device (300) being capable of communicably connecting said portable terminal (100) and a plurality of output terminals (PR₁ to PRₙ) situated at various locations for printing data, via a network (400);
said data output control device (300) comprising:
selecting means for selecting one of said plurality of output terminals (PR₁ to PRₙ); **characterised by**
image data generating means (CS) for generating conceptual image data displayable by said portable terminal (100) to provide a conceptual image representing a printed image that would be produced by an output terminal (PR) selected by said selecting means on the basis of said data printing request; and
output means for outputting data relating to said data printing requests to an output terminal (PR) selected by said selecting means;
wherein said output means is capable of outputting conceptual image data generated by said image data generating means (CS) to said portable terminal (100), and in the event of receiving a data printing execution request from said portable terminal (1.00) as a response to the output of said conceptual image data, said output means is further capable of outputting data specified in said data printing execution request relating to said data printing request to the output terminal (PR) selected by said selecting means.

3. A data output control system comprising the portable terminal (100) according to claim 1 and the data output control device (300) according to claim 2.

## Patentansprüche

1. Tragbares Endgerät (100), das zum Senden von Datendruckanfragen imstande ist und kommunizierbar an eine Mehrzahl von Ausgabeendgeräten (PR₁ bis PRₙ), die an verschiedenen Stellen zum Drucken von Daten angeordnet sind, über eine Datenausgabesteuervorrichtung (300) und ein Netz (400) anschließbar ist, wobei das tragbare Endgerät (100) umfasst:
ein Datendruckanfrageerstellungsmittel zum Senden der Datendruckanfragen zu der Datenausgabesteuervorrichtung (300); **gekennzeichnet durch**
ein Anzeigemittel (44) zum Anzeigen konzeptioneller Bilddaten von der Datenausgabesteuervorrichtung (300), um ein konzeptionelles Bild bereitzustellen, das ein gedrucktes Bild repräsentiert, das von einem Ausgabeendgerät (PR) erzeugt werden würde, das von der Datenausgabesteuervorrichtung (300) auf der Basis der Datendruckanfrage ausgewählt wird;
ein Eingabemittel (40) zum Eingeben einer Spezifikation eines Teils, dessen Druck erwünscht ist, falls die konzeptionellen Bilddaten, die auf dem Anzeigemittel angezeigt werden, aus einer Mehrzahl von Datensätzen bestehen; und
ein Datendruckausführungsanfrageerstellungsmittel zum Senden von Datendruckausführungsanfragen zu der Datenausgabesteuervorrichtung (300);
wobei das Datendruckausführungsanfrageerstellungsmittel eine Datendruckausführungsanfrage zu der Datenausgabesteuervorrichtung (300) sendet, die eine Anfrage zum Drucken eines spezifizierten Teils enthält, der mit dem Eingabemittel (40) eingegeben wurde, falls eine Eingabe mit dem Eingabemittel (40) erfolgt ist.

2. Datenausgabesteuervorrichtung (300), die zum Empfangen von Datendruckanfragen von einem tragbaren Endgerät (100) und zum Ausführen einer Ausgabesteuerung von Daten, die sich auf die Datendruckanfragen beziehen, imstande ist; wobei die Datenausgabesteuervorrichtung (300) zum kommunizierbaren Anschließen des tragbaren Endgeräts (100) an eine Mehrzahl von Ausgabeendgeräten (PR₁ bis PRₙ), die an verschiedenen Stellen zum Drucken von Daten angeordnet sind, über ein Netz (400) imstande ist;
wobei die Datenausgabesteuervorrichtung (300) umfasst:
ein Auswahlmittel zum Wählen eines der Mehrzahl von Ausgabeendgeräten (PR₁ bis PRₙ); **gekennzeichnet durch**
ein Bilddatenerzeugungsmittel (CS) zum Erzeugen konzeptioneller Bilddaten, die von dem tragbaren Endgerät (100) angezeigt werden können, um ein konzeptionelles Bild bereitzustellen, das ein gedrucktes Bild repräsentiert, das von einem Ausgabeendgerät (PR) erzeugt werden würde, das von dem Auswahlmittel auf der Basis der Datendruckanfrage ausgewählt wird; und
ein Ausgabemittel zum Ausgeben von Daten, die sich auf die Datendruckanfragen beziehen, an ein Ausgabeendgerät (PR), das von dem Auswahlmittel ausgewählt wird;
wobei das Ausgabemittel imstande ist, konzeptionelle Bilddaten, die von dem Bilddatenerzeugungsmittel (CS) erzeugt wurden, an das tragbare Endgerät (PR) auszugeben, und falls eine Datendruckausführungsanfrage von dem tragbaren Endgerät (100) als Antwort auf die Ausgabe der konzeptionellen Bilddaten empfangen wird, das Ausgabemittel ferner imstande ist, Daten, die in der Datendruckausführungsanfrage spezifiziert sind, die sich auf die Datendruckanfrage bezieht, an das Ausgabeendgerät (100) auszugeben, das von dem Auswahlmittel ausgewählt wird.

3. Datenausgabesteuersystem, umfassend das tragbare Endgerät (100) nach Anspruch 1 und die Datenausgabesteuervorrichtung (300) nach Anspruch 2.

## Revendications

1. Terminal portable (100) capable d'envoyer des demandes d'impression de données et pouvant être connecté de manière communicante à une pluralités de terminaux de sortie (PR₁ à PRₙ) situés en différents endroits pour imprimer des données, via un dispositif de commande de sortie de données (300) et un réseau (400), ledit terminal portable (100) comprenant :
un moyen d'émission d'une demande d'impression de données, pour envoyer lesdites demandes d'impression de données audit dispositif de commande de sortie de données (300); **caractérisé par**
un moyen d'affichage (44) pour afficher des données d'image conceptuelles provenant dudit dispositif de commande de sortie de données (300), afin de fournir une image conceptuelle représentant une image imprimée qui serait produite par un terminal de sortie (PR) sélectionné par le dispositif de commande de sortie de données (300) sur la base de ladite demande d'impression de données ;
un moyen d'entrée (40) pour faire entrer une spécification d'une partie concernant l'impression qui est souhaitée dans l'éventualité où les données d'image conceptuelles affichées au niveau dudit moyen d'affichage sont formées par une pluralité de jeux de données; et
un moyen d'émission de demandes d'exécution de l'impression des données, pour envoyer des demandes d'exécution de l'impression des données audit dispositif de commande de sortie des données (300) ;
ledit moyen d'émission de demandes d'exécution de l'impression des données envoyant audit dispositif de commande de sortie de données (300) une demande d'exécution de l'impression des données contenant une demande pour imprimer une partie spécifique saisie avec ledit moyen d'entrée (40), dans l'éventualité où il y a eu une saisie avec ledit moyen d'entrée (40).

2. Dispositif de commande de sortie de données (300) capable de recevoir des demandes d'impression de données d'un terminal portable (100) et de réaliser une commande de sortie de données concernant les demandes d'impression de données ;
ledit dispositif de commande de sortie de données (300) étant capable de connecter de manière communicante ledit terminal portable (100) et une pluralité de terminaux de sortie (PR₁ à PRₙ) situés en différents endroits pour imprimer des données, via un réseau (400) ;
ledit dispositif de commande de sortie de données (300) comprenant :
un moyen de sélection, pour sélectionner l'un parmi ladite pluralité des terminaux de sortie (PR₁ à PRₙ) ; **caractérisé par**
un moyen de génération de données d'image (CS) pour générer des données d'image conceptuelles pouvant être affichées par ledit terminal portable (100) afin de fournir une image conceptuelle représentant une image imprimée qui serait produite par un terminal de sortie (PR) sélectionné par ledit moyen de sélection sur la base de ladite demande d'impression de données ; et
un moyen de sortie, pour faire sortir des données concernant lesdites demandes d'impression de données à l'attention d'un terminal de sortie (PR) sélectionné par ledit moyen de sélection ;
ledit moyen de sortie étant capable de faire sortir des données d'image conceptuelles générées par ledit moyen de génération de données d'image (CS) à l'attention dudit terminal portable (100), et dans l'éventualité de la réception d'une demande d'exécution de l'impression des données provenant dudit terminal portable (100) en tant que réponse à la sortie desdites données d'image conceptuelles, ledit moyen de sortie étant en outre capable de faire sortir des données spécifiées dans ladite demande d'exécution de l'impression des données concernant ladite demande d'impression de données à l'attention du terminal de sortie (PR) sélectionné par ledit moyen de sélection.

3. Système de commande de sortie de données comprenant le terminal portable (100) selon la revendication 1 et le dispositif de commande de sortie de données (300) selon la revendication 2.
